# EUROPÄISCHE PATENTANMELDUNG

(11) **EP 4 621 507 A1**
(43) Veröffentlichungstag der Anmeldung: **24.09.2025**
(21) Anmeldenummer: 24165217.1
(22) Anmeldetag: 21.03.2024
(51) Int. Cl.: G05B 19/19, G05B 19/404, G05B 19/418

(54) **BETREIBEN EINER MASCHINE ZUR BEARBEITUNG EINES WERKSTÜCKS**

(71) Anmelder: Siemens Aktiengesellschaft, 80333 München (DE)
(72) Erfinder: Alkafafi, Loay, 91052 Erlangen (DE); Pitz, Thomas, 71277 Rutesheim (DE); Spielmann, Ralf, 70569 Stuttgart (DE)
(74) Vertreter: Siemens Patent Attorneys

(57) **Zusammenfassung**

Zum Betreiben einer ersten Maschine (10) zur Bearbeitung eines Werkstücks (12) wird mittels eines Datenverarbeitungssystems (2) ein Sollprofil (4) erhalten, welches wenigstens einen Teil einer Oberfläche oder einer Kontur des Werkstücks (12) gemäß einem angestrebten Bearbeitungsergebnis beschreibt, und abhängig von einer Wavelet-Transformation des Sollprofils (4) ein Verfahrprofil (5) erzeugt. Mittels eines Steuerungsgeräts (3) der ersten Maschine (10) werden erste spezifische Daten (7) erhalten, welche maschinenspezifische Informationen betreffend die erste Maschine (10) und/oder werkzeugspezifische Informationen betreffend ein Werkzeug der erste Maschine (10) zur Bearbeitung des Werkstücks (12) beinhalten, und wird wenigstens eine Achse der ersten Maschine (10) gemäß dem Verfahrprofil (5) abhängig von den ersten spezifischen Daten (7) gesteuert, um das Werkstück (12) zu bearbeiten.

## Beschreibung

Die Erfindung betrifft ein Verfahren zum Betreiben einer ersten Maschine zur Bearbeitung eines Werkstücks, ein Verfahren zum Betreiben einer Vielzahl von Maschinen zur jeweiligen Bearbeitung eines Werkstücks, ein Steuerungssystem zum Betreiben einer ersten Maschine zur Bearbeitung eines Werkstücks, eine Maschinenvorrichtung mit einem solchen Steuerungssystem, sowie ein entsprechendes Computerprogrammprodukt.

Zur Steuerung einer Maschine zur Bearbeitung eines Werkstücks, beispielsweise einer Werkzeugmaschine, insbesondere einer CNC-Werkzeugmaschine (CNC: "computerized numerical control"), einer Laserbearbeitungsmaschine oder einer Wasserstrahlbearbeitungsmaschine, wird häufig ein Verfahrprofil erzeugt. Das Verfahrprofil gibt die Bahn an, entlang der ein Werkzeug der ersten zur Bearbeitung des Werkstücks bewegt wird, um ein vorgegebenes Sollprofil zu realisieren, welches durch die Bewegung des Werkzeugs entlang des Verfahrprofils am Werkstück erzeugt werden soll. Der Begriff des Werkzeugs wird hier und im Folgenden breit verwendet, sodass er zum einen Werkzeuge im Sinne einer Werkzeugmaschine umfasst, also beispielsweise Fräser, Bohrer oder Drehmeißel, als auch den Laserstrahl oder den Fokuspunkt des Laserstrahls bei einer Laserbearbeitungsmaschine, beziehungsweise den Wasserstrahl oder Fokuspunkt des Wasserstrahls bei einer Wasserstrahlbearbeitungsmaschine.

Ausgangspunkt zur Berechnung des Verfahrprofils ist beispielsweise eine technische Zeichnung in Form einer CAD-Datei (CAD: "computer aided design"). Aus der technischen Zeichnung wird beispielsweise ein sogenanntes G-Code-Programm, auch CNC-Programm oder Teile-Programm genannt, erzeugt, welches das Verfahrprofil definiert. Die Erzeugung des G-Code-Programms ist beispielsweise automatisiert, wobei zum Teil von CAD/CAM/PP-Verfahren gesprochen wird (CAM: "computer aided manufacturing", PP: "post processing"). Zur Berechnung des Verfahrprofils kann beispielsweise eine Fourier-Transformation eingesetzt werden. In Dokument EP 3 144 760 A1 wird die Verwendung einer Wavelet-Transformation anstelle der Fourier-Transformation vorgeschlagen.

Für viele Anwendungsfälle liegt die Situation von, dass eine extrem hohe Anzahl identischer Teile, beispielsweise mehrere Tausend bis hin zu mehreren Millionen oder noch höhere Zahlen identischer Teile, zu fertigen sind. Als Beispiele können hier Gehäuseschalen für elektronische Geräte, etwa Smartphones, Ventile, beispielsweise Heizungsventile, Spezialschrauben, und so weiter genannt werden. Hierfür werden in der Regel viele Maschinen parallel betrieben. Vor allem bei komplexeren Teilen, insbesondere hinsichtlich deren Oberfläche oder Form, sind hierfür, und insbesondere für die genannte Wavelet-Transformation, Maschinen mit sehr leistungsfähigen Steuerungsgeräten, insbesondere CNC-Steuerungen, erforderlich, was zu sehr hohen Kosten führen kann.

Es ist eine Aufgabe der vorliegenden Erfindung, bei der Bearbeitung von Werkstücken mit Maschinen die Rechenanforderungen für Steuerungsgeräte der Maschinen zu reduzieren, insbesondere für die Fertigung einer Vielzahl identischer oder im Wesentlichen identischer Werkstücke mit mehreren Maschinen.

Diese Aufgabe wird durch den jeweiligen Gegenstand der unabhängigen Ansprüche gelöst. Vorteilhafte Weiterbildungen und bevorzugte Ausführungsformen sind Gegenstand der abhängigen Ansprüche.

Die Erfindung beruht auf der Erkenntnis, dass die Steuerungsgeräte der Maschinen größtenteils immer wieder dieselben Berechnungen mit denselben Software-Algorithmen durchführen. Daher wird vorgeschlagen, Vorverarbeitungsschritte zur Erzeugung des Verfahrprofils aus dem Sollprofil von Schritten zur Steuerung der Maschine voneinander zu trennen. Die Vorverarbeitungsschritte zur Erzeugung des Verfahrprofils werden von einem externen Datenverarbeitungssystem durchgeführt und nur die verbleibenden Schritte werden unter Berücksichtigung maschinenspezifischer Informationen und/oder werkzeugspezifischer Informationen durch das Steuerungsgerät der Maschine durchgeführt. Das Verfahrprofil muss daher nur einmal berechnet werden und kann dann vielen Maschinen zur Verfügung gestellt werden.

Gemäß einem Aspekt der Erfindung wird ein Verfahren zum Betreiben einer ersten Maschine zur Bearbeitung eines Werkstücks bereitgestellt. Dabei wird mittels eines Datenverarbeitungssystems ein Sollprofil erhalten, welches wenigstens einen Teil einer Oberfläche oder einer Kontur des Werkstücks gemäß einem angestrebten Bearbeitungsergebnis beschreibt. Mittels des Datenverarbeitungssystems wird abhängig von einer Wavelet-Transformation des Sollprofils ein Verfahrprofil, insbesondere ein Verfahrprofil für ein Werkzeug der ersten Maschine zur Bearbeitung des Werkstücks, erzeugt. Mittels eines Steuerungsgeräts der ersten Maschine werden erste spezifische Daten erhalten, welche maschinenspezifische Informationen betreffend die erste Maschine und/oder werkzeugspezifische Informationen betreffend das Werkzeug der ersten Maschine zur Bearbeitung des Werkstücks beinhalten. Mittels des Steuerungsgeräts wird wenigstens eine Achse, insbesondere wenigstens eine Linearachse und/oder wenigstens eine Drehachse, der ersten Maschine gemäß dem Verfahrprofil abhängig von den ersten spezifischen Daten gesteuert wird, um das Werkstück zu bearbeiten.

In der vorliegenden Offenbarung können die Ausdrücke "Datenverarbeitungssystem" und "wenigstens ein Datenverarbeitungsgerät" austauschbar verwendet werden. Unter einem Datenverarbeitungsgerät kann insbesondere ein Datenverarbeitungsgerät verstanden werden, das einen Verarbeitungsschaltkreis enthält. Das Datenverarbeitungsgerät kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen ebenso wie ein in Hardware implementierter Datenverarbeitungsprozess.

Das Datenverarbeitungsgerät kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Das Datenverarbeitungsgerät kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Das Datenverarbeitungsgerät kann auch einen physischen oder einen virtuellen Verbund von Computern oder sonstigen der genannten Einheiten beinhalten.

In verschiedenen Ausführungsbeispielen beinhaltet das Datenverarbeitungsgerät eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "readonly memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Das in dem erfindungsgemäßen Verfahren eingesetzte Datenverarbeitungssystem ist insbesondere extern beziehungsweise separat zu der ersten Maschine, insbesondere dem Steuerungsgerät der ersten Maschine, vorgesehen. Es ist also insbesondere physisch nicht mit der ersten Maschine gekoppelt, wobei drahtlose oder drahtgebundene Verbindungen zur Datenübertragung zwischen dem Datenverarbeitungssystem und der ersten Maschine, insbesondere zwischen dem Datenverarbeitungssystem und dem Steuerungsgerät der ersten Maschine vorhanden sein können, beispielsweise zur Bereitstellung des Verfahrprofils an das Steuerungsgerät.

Das Steuerungsgerät kann ebenfalls eines oder mehrere Datenverarbeitungsgeräte gemäß dem obenstehenden Verständnis beinhalten. Beispielsweise kann es sich bei dem Steuerungsgerät um eine CNC-Steuerung handeln, insbesondere wenn es sich bei der ersten Maschine um eine CNC-Werkzeugmaschine handelt.

Die Wavelet-Transformation kann insbesondere als diskrete Wavelet-Transformation durchgeführt werden. Bekanntlich wird zur Wavelet-Transformation eine Wavelet-Funktion, auch als Wavelet-Basisfunktion oder Mutter-Wavelet-Funktion (englisch: "mother wavelet") verwendet, die parametrisch von zwei Parametern abhängt, die auch als Translationsparameter b und Skalierungsparameter a bezeichnet werden. Die Wavelet-Transformation kann vorliegend gemäß genau einem Tupel (a, b) durchgeführt werden oder gemäß mehreren solcher Tupel. Das Gesamtergebnis wird vorliegend als Wavelet-Transformation des Sollprofils bezeichnet, sofern nichts anderes erwähnt ist.

Das Verfahrprofil kann durch eine geometrische Beschreibung einer Bahn festgelegt sein, also insbesondere durch Punkte im n-dimensionalen Parameterraum, wobei n der Gesamtanzahl der wenigstens einen Achse entspricht. Im Falle einer Maschine mit drei Linearachsen ist n beispielsweise gleich drei, bei zusätzlich drei Rotationsachsen wäre n gleich sechs und so weiter. Insbesondere beinhaltet das Verfahrprofil keine Vorgaben bezüglich einer tatsächlichen Bahngeschwindigkeit, einer tatsächlichen Bahnbeschleunigung, eines tatsächlichen Bahnrucks, einer Interpolation zwischen den Punkten und so weiter. Das Verfahrprofil kann jedoch Beschränkungen für diese Werte beinhalten. Diese Beschränkungen können beispielsweise als Zusatzinformationen zur Abarbeitung in das Verfahrprofil mit eingearbeitet werden. Beispiele für die Beschränkungen sind Dynamikbegrenzungen betreffend Geschwindigkeiten, Beschleunigungen oder Rucke, aber auch nicht dynamikbezogene Informationen zur Polbehandlung bei kinematischen Transformationen, Ausweichstrategien zur Kollisionsvermeidung, Energieverbrauchsoptimierungsinformationen, und so weiter. Abgesehen davon kann das Steuerungsgerät diese Werte und Bedingungen bestimmen, wenn sie die wenigstens eine Achse der ersten Maschine gemäß dem Verfahrprofil steuert.

Das Verfahrprofil kann als generisches Verfahrprofil angesehen werden, das dem Steuerungsgerät der ersten Maschine aber optional auch dem jeweiligen Steuerungsgerät einer oder mehrerer zweiter Maschinen zur Verfügung gestellt werden kann. Das Steuerungsgerät der ersten Maschine kann dann abhängig von den ersten spezifischen Daten die wenigstens eine Achse derart steuern, dass das Verfahrprofil unter den konkret für die erste Maschine gegebenen Bedingungen, spezifiziert zumindest auch durch die maschinenspezifischen Informationen und/oder die werkzeugspezifischen Informationen, realisiert wird. Mit anderen Worten werden die ersten spezifischen Daten genutzt, um maschinenspezifische und/oder werkzeugspezifische Abweichungen von entsprechenden Idealbedingungen zu kompensieren oder korrigieren. Entsprechendes gilt analog für die eine oder mehreren zweiten Maschinen.

Die entsprechenden Rechenschritte zur Korrektur oder Kompensation maschinenspezifischer und/oder werkzeugspezifischer Abweichungen von den Idealbedingungen werden von den generischen Rechenschritten zur Erzeugung des Verfahrprofils entkoppelt und von dem ersten dem Steuerungsgerät der ersten Maschine und gegebenenfalls den jeweiligen Steuerungsgeräten der zweiten Maschinen durchgeführt. Die generischen Rechenschritte zur Erzeugung des Verfahrprofils werden dagegen zentralisiert vorgelagert und vor allem nur einmalig durch das Datenverarbeitungssystem, welches im Allgemeinen kein Steuerungsgerät für eine Maschine ist, sondern beispielsweise auch ein Universalcomputer (englisch: "general purpose computer") sein kann, durchgeführt.

Dadurch, dass die genannten generischen Rechenschritte nur einmal und nicht von den Steuerungsgeräten der Maschinen durchgeführt werden müssen, können die Steuerungsgeräte der Maschinen entsprechend einfacher ausgelegt werden. Diese müssen insbesondere nicht über dieselbe Rechenleistung verfügen, wie es erforderlich wäre, wenn diese auch das Verfahrprofil aus dem Sollprofil berechnen müssten. Insbesondere die Wavelet-Transformation mit den im eingangs genannten Dokument beschriebenen Vorteilen muss nicht durch die Steuerungsgeräte und vor allem nicht mehrfach durch mehrere Steuerungsgeräte durchgeführt werden.

Die erste Maschine kann beispielsweise eine Werkzeugmaschine, insbesondere eine CNC-Werkzeugmaschine, oder eine Laserbearbeitungsmaschine oder eine Wasserstrahlbearbeitungsmaschine sein. Die erste Maschine kann auch eine Maschine zur additiven Fertigung sein.

Gemäß zumindest einer Ausführungsform wird das Verfahrprofil mittels des Datenverarbeitungssystems auf einem Speichergerät gespeichert und durch das Steuerungsgerät aus dem Speichergerät ausgelesen.

Das Speichergerät kann beispielsweise Teil des Datenverarbeitungssystems sein. Das Steuerungsgerät hat dann per drahtloser oder drahtgebundener Kommunikation einen Lesezugriff auf das Speichergerät des Datenverarbeitungssystems. Das Speichergerät kann auch Teil eines weiteren Datenverarbeitungssystems, beispielsweise eines Servercomputersystems oder eines Cloudspeichers oder dergleichen, sein. Das Datenverarbeitungssystem hat dann per drahtloser oder drahtgebundener Kommunikation einen Schreibzugriff auf das Speichergerät des weiteren Datenverarbeitungssystems und das Steuerungsgerät hat per drahtloser oder drahtgebundener Kommunikation einen Lesezugriff auf das Speichergerät des weiteren Datenverarbeitungssystems.

Damit kann das Verfahrprofil zentral bereitgestellt werden, sodass das Steuerungsgerät der ersten Maschine und gegebenenfalls die Steuergeräte der zweiten Maschinen Zugriff auf das Verfahrprofil haben.

Das Speichergerät kann auch Teil des Steuerungsgeräts sein. Das Datenverarbeitungssystem hat dann per drahtloser oder drahtgebundener Kommunikation einen Schreibzugriff auf das Speichergerät des Steuerungsgeräts.

Damit kann das Verfahrprofil zentral erzeugt und dann dezentral dem Steuerungsgerät der ersten Maschine und gegebenenfalls den Steuergeräten der zweiten Maschinen zur Verfügung gestellt werden.

Gemäß zumindest einer Ausführungsform wird das Verfahrprofil derart erzeugt, dass es eine geometrische Beschreibung einer Bahn beinhaltet, insbesondere einer Bahn für das Werkzeug.

Gemäß zumindest einer Ausführungsform wird das Verfahrprofil derart erzeugt, dass es zusätzlich zu der Bahn Zusatzinformationen zur Abarbeitung durch das Steuerungsgerät beinhaltet.

Gemäß zumindest einer Ausführungsform beinhalten die Zusatzinformationen eine jeweilige Beschränkung, insbesondere einen jeweiligen Maximalwert, für eine oder mehrere dynamische Größen, wie etwa eine Bahngeschwindigkeit, eine Werkzeuggeschwindigkeit oder eine Achsgeschwindigkeit, eine Bahnbeschleunigung, eine Werkzeugbeschleunigung oder eine Achsbeschleunigung, einen Bahnruck, einen Werkzeugruck oder einen Achsruck, und so weiter.

Auf diese Weise können weitere generisch relevante Größen effizient in das Verfahrprofil eingearbeitet werden und brauchen nicht wiederholt durch das Steuerungsgerät eingearbeitet werden.

Gemäß zumindest einer Ausführungsform wird zum Erzeugen des Verfahrprofils mittels des Datenverarbeitungssystems ein transformiertes Profil erzeugt, indem die Wavelet-Transformation des Sollprofils berechnet wird, und das transformierte Profil modifiziert wird. Das Verfahrprofil wird erzeugt, indem eine inverse Wavelet-Transformation des modifizierten transformierten Profils berechnet wird.

Mit anderen Worten wird die Modifikation also nicht der zeitlichen Domäne des Verfahrprofils vorgenommen, sondern in der gemischten Zeit-/Frequenz-Domäne der Wavelet-Transformation. Die Modifikation kann verschiedenen Aspekten der Bearbeitung des Werkstücks Rechnung getragen werden, beispielsweise der Bearbeitungsart oder damit verbundenen Kennzahlen für die Bearbeitung des Werkstücks und/oder die Ansteuerung der Maschinenachsen. Somit kann das Verfahrprofil genauer an die konkreten Erfordernisse angepasst werden. Dadurch, dass auch die Modifikation und die inverse Wavelet-Transformation nur einmalig durch das Datenverarbeitungssystem durchgeführt werden muss und nicht durch das Steuerungsgerät der ersten Maschine, wird der Rechenaufwand für das Steuerungsgerät dennoch nicht erhöht.

Gemäß zumindest einer Ausführungsform werden Toleranzdaten betreffend eine Toleranz des Sollprofils erhalten. Die Modifikation des transformierten Profils wird abhängig von den Toleranzdaten durchgeführt.

Dementsprechend können für verschiedene zu erzielende Genauigkeiten und aufgrund folglich einzuhaltender Toleranzen verschiedene Modifikationen des transformierten Profils vorgenommen werden. So kann ein effizienter Kompromiss zwischen dem zu betreibenden Rechenaufwand zur Erstellung des Verfahrprofils und der resultierenden Genauigkeit in Einklang mit den jeweils erforderlichen Toleranzen erzielt werden.

Die Toleranzdaten werden beispielsweise von dem Datenverarbeitungssystem erhalten, beispielsweise in Form oder basierend auf einer Benutzereingabe.

Gemäß zumindest einer Ausführungsform wird die Wavelet-Transformation als diskrete Wavelet-Transformation durchgeführt.

Gemäß zumindest einer Ausführungsform beinhaltet die diskrete Wavelet-Transformation eine Multiskalenanalyse mit einer vorgegebenen Anzahl von Skalen.

Gemäß zumindest einer Ausführungsform wird die Anzahl der Skalen der Multiskalenanalyse erhalten, insbesondere von dem Datenverarbeitungssystem, beispielsweise in Form oder basierend auf der Benutzereingabe oder einer weiteren Benutzereingabe.

Dementsprechend können für verschiedene zu erzielende Genauigkeiten verschieden viele Skalen zur Wavelet-Transformation eingesetzt werden. So kann ein effizienter Kompromiss zwischen dem zu betreibenden Rechenaufwand zur Erstellung des Verfahrprofils und der resultierenden Genauigkeit erzielt werden.

Gemäß zumindest einer Ausführungsform wird eine Wavelet-Basisfunktion zur Durchführung der Wavelet-Transformation, und insbesondere zur Durchführung der inversen Wavelet-Transformation, abhängig von den Toleranzdaten bestimmt. Beispielsweise können zwei oder mehr potentiell einsetzbare Wavelet-Basisfunktionen vorgegeben sein und abhängig von den Toleranzdaten wird eine davon ausgewählt.

Unterschiedliche Wavelet-Basisfunktionen, die im Rahmen der Wavelet-Transformation beispielsweise unterschiedlich skaliert und/oder verschoben werden, können sich für unterschiedliche zu erreichende Genauigkeiten besonders gut eignen. Durch die Auswahl der Wavelet-Basisfunktionen abhängig von den Toleranzdaten kann auch ein effizienter Kompromiss zwischen dem zu betreibenden Rechenaufwand zur Erstellung des Verfahrprofils und der resultierenden Genauigkeit im Einklang mit den jeweils erforderlichen Toleranzen erzielt werden beziehungsweise die angestrebte Genauigkeit kann mit höherer Zuverlässigkeit erreicht werden.

Gemäß zumindest einer Ausführungsform wird die Modifikation des transformierten Profils abhängig von einer vorgegebenen Bearbeitungsart zur Bearbeitung des Werkstücks durchgeführt.

Beispielsweise können zwei oder mehr Bearbeitungsarten vorgegeben sein und eine davon wird ausgewählt, beispielsweise durch die Benutzereingabe oder eine weitere Benutzereingabe. Es ist auch möglich, dass das Datenverarbeitungssystem abhängig von den Toleranzdaten, falls diese in den entsprechenden Ausführungsformen vorgesehen sind, und/oder abhängig von weiteren, beispielsweise durch die Benutzereingabe oder weitere Benutzereingabe definierten, Informationen die Bearbeitungsart aus den zwei oder mehr vorgegeben Bearbeitungsarten automatisch auswählt oder einem Benutzer vorschlägt, und so weiter.

Beispielsweise kann ein grobes Abtragen überschüssigen Materials mit einem Schruppverfahren erfolgen, eine detailliertere Bearbeitung kann durch ein Feinbearbeitungsverfahren erfolgen. Ein Metallstück kann beispielsweise durch ein Laserschneidverfahren aus einem größeren Metallstück herausgetrennt werden. Unterschiedliche Bearbeitungsarten erfordern mitunter unterschiedliche Genauigkeiten, unterschiedliche Werkzeuggeschwindigkeiten, und so weiter, was beispielsweise durch verschiedene Maßzahlen wie Toleranzen, Materialkonstanten, und so weiter beschreibbar ist.

Die zwei oder mehr vorgegeben Bearbeitungsarten können beispielsweise eine Bearbeitungsart "Schruppverfahren" und/oder eine Bearbeitungsart "3D-Feinbearbeitung" und/oder eine Bearbeitungsart "2D-Laserschneiden" und/oder eine Bearbeitungsart "3D-Wasserstrahlschneiden" und/oder eine Bearbeitungsart "additive Fertigung Kunststoff" und/oder eine Bearbeitungsart "additive Fertigung Metall", und so weiter beinhalten.

Dementsprechend können für verschiedene Bearbeitungsarten und aufgrund folglich einzuhaltender Toleranzen verschiedene Modifikationen des transformierten Profils vorgenommen werden. So kann ein effizienter Kompromiss zwischen dem zu betreibenden Rechenaufwand zur Erstellung des Verfahrprofils und der resultierenden Genauigkeit im Einklang mit der jeweiligen Bearbeitungsart erzielt werden.

Es sei darauf hingewiesen, dass es je nach Anwendungsfall möglich ist, dass die erste Maschine gemäß allen der zwei oder mehr Bearbeitungsarten benutzt werden kann. Es ist jedoch auch möglich, dass die erste Maschine nur gemäß einem Teil der zwei oder mehr Bearbeitungsarten oder nur gemäß einer einzigen der zwei oder mehr Bearbeitungsarten benutzt werden kann. Dementsprechend kann in manchen Ausführungsformen auch die erste Maschine selbst abhängig von der Bearbeitungsarten bestimmt werden.

Gemäß zumindest einer Ausführungsform wird die Wavelet-Basisfunktion zur Durchführung der Wavelet-Transformation, und insbesondere zur Durchführung der inversen Wavelet-Transformation, abhängig von der Bearbeitungsart bestimmt.

Durch die Auswahl der Wavelet-Basisfunktionen abhängig von der Bearbeitungsart kann auch ein effizienter Kompromiss zwischen dem zu betreibenden Rechenaufwand zur Erstellung des Verfahrprofils und der resultierenden Genauigkeit im Einklang mit der jeweiligen Bearbeitungsart erzielt werden beziehungsweise die angestrebte Genauigkeit kann mit höherer Zuverlässigkeit erreicht werden.

Gemäß zumindest einer Ausführungsform beinhaltet das Steuern der wenigstens einen Achse gemäß dem Verfahrprofil, dass mittels des Steuerungsgeräts abhängig von den ersten spezifischen Daten und dem Verfahrprofil eine Vielzahl von Verarbeitungsschritten gemäß einem vorgegebenen Takt getaktet abgearbeitet wird.

Mit anderen Worten erfolgt das Steuern der wenigstens einen Achse gemäß dem Verfahrprofil in Echtzeit, was auch als Online-Steuerung bezeichnet wird. Dies ist insbesondere bei CNC-Steuerungen der Fall. Daher ist es besonders vorteilhaft, diese getakteten Arbeitsschritte mittels der individuellen Maschine durchzuführen, um die Maschine möglichst effizient nutzen zu können.

Die zur Erzeugung des Verfahrprofils mittels des Datenverarbeitungssystems durchgeführten Berechnungsschritte erfolgen insbesondere nicht getaktet. Mit anderen Worten erfolgen diese Berechnungsschritte nicht in Echtzeit, was auch als Offline-Berechnung bezeichnet werden kann. Mit anderen Worten erfolgt die Trennung zwischen Datenverarbeitungssystem und Steuerungsgerät in solchen Ausführungsformen zwischen Offline-Berechnungen des Verfahrprofils und der Online-Steuerung durch das Steuerungsgerät. Diese Trennung ist besonders vorteilhaft, da damit verhindert werden kann, dass das Steuerungsgerät während der getakteten Abarbeitung auf das Ergebnis von nicht in Echtzeit durchgeführten Berechnungen warten muss.

Gemäß zumindest einer Ausführungsform ist das Datenverarbeitungssystem ein von der ersten Maschine und dem Steuerungsgerät der ersten Maschine getrenntes Computersystem.

Die mittels des Datenverarbeitungssystems durchgeführten Schritte zur Erzeugung des Verfahrprofils können daher auch räumlich unabhängig von der ersten Maschine erfolgen und das erzeugte Verfahrprofil kann beispielsweise zentral bereitgestellt werden.

Das Computersystem braucht auch kein spezifisch für CNC-Steuerung oder dergleichen ausgelegtes Computersystem sein, sondern kann in manchen Ausführungsformen ein Universalcomputer sein.

Gemäß zumindest einer Ausführungsform beinhalten die ersten spezifischen Daten eine Umgebungstemperatur der ersten Maschine. Insbesondere wird die wenigstens eine Achse der ersten Maschine mittels des Steuerungsgeräts gemäß dem Verfahrprofil abhängig von der Umgebungstemperatur gesteuert, um das Werkstück zu bearbeiten.

Die Umgebungstemperatur kann die exakte Lage und/oder das exakte Verhalten der wenigstens einen Achse und/oder sonstiger Komponenten der ersten Maschine zur Bearbeitung des Werkstücks beeinflussen. Solche Temperatureinflüsse kann das Steuerungsgerät bei der Steuerung der wenigstens einen Achse kompensieren. Für die Berechnung des Verfahrprofils ist die Umgebungstemperatur dagegen nicht erforderlich. Somit kann das angestrebte Ergebnis der Bearbeitung des Werkstücks mit erhöhter Genauigkeit beziehungsweise temperaturunabhängig erreicht werden.

Gemäß zumindest einer Ausführungsform beinhalten die ersten spezifischen Daten wenigstens einen Achsversatzwert der wenigstens einen Achse der ersten Maschine, beispielsweise einen jeweiligen Achsversatzwert für jede Achse der wenigstens einen Achse der ersten Maschine. Insbesondere wird die wenigstens eine Achse der ersten Maschine mittels des Steuerungsgeräts gemäß dem Verfahrprofil abhängig von dem wenigstens einen Achsversatzwert gesteuert, um das Werkstück zu bearbeiten.

Ein Achsversatzwert kann dabei beispielsweise eine Abweichung der entsprechenden Achse von einer nominellen Ruhe- oder Referenzposition sein. Das Steuerungsgerät kann den Achsversatzwert bei der Steuerung der wenigstens einen Achse kompensieren. Somit kann das angestrebte Ergebnis der Bearbeitung des Werkstücks mit erhöhter Genauigkeit beziehungsweise auch für verschiedene Achsversatzwerte konsistent erreicht werden.

Gemäß zumindest einer Ausführungsform beinhalten die ersten spezifischen Daten eine Nullpunktverschiebung des Werkstücks und/oder eine Nullpunktverschiebung des Werkzeugs. Insbesondere wird die wenigstens eine Achse der ersten Maschine mittels des Steuerungsgeräts gemäß dem Verfahrprofil abhängig von der Nullpunktverschiebung des Werkstücks und/oder der Nullpunktverschiebung des Werkzeugs gesteuert, um das Werkstück zu bearbeiten.

Die Nullpunktverschiebung des Werkstücks und/oder des Werkzeugs kann beispielsweise eine Abweichung der entsprechenden Einspannposition des Werkstücks beziehungsweise des Werkzeugs von einer nominellen Nullpunktposition sein. Das Steuerungsgerät kann die Nullpunktverschiebungen bei der Steuerung der wenigstens einen Achse kompensieren. Somit kann das angestrebte Ergebnis der Bearbeitung des Werkstücks mit erhöhter Genauigkeit beziehungsweise auch für verschiedene Einspannsituationen konsistent erreicht werden.

Gemäß zumindest einer Ausführungsform beinhalten die ersten spezifischen Daten eine Abweichung einer Werkzeuggeometrie des Werkzeugs von einer vorgegebenen Idealgeometrie. Insbesondere wird die wenigstens eine Achse der ersten Maschine mittels des Steuerungsgeräts gemäß dem Verfahrprofil abhängig von der Abweichung der Werkzeuggeometrie gesteuert, um das Werkstück zu bearbeiten.

Die Abweichung der Werkzeuggeometrie von der Idealgeometrie kann beispielsweise durch Verschleiß des Werkzeugs verursacht werden. Das Steuerungsgerät kann solche Abweichungen bei der Steuerung der wenigstens einen Achse kompensieren. Somit kann das angestrebte Ergebnis der Bearbeitung des Werkstücks mit erhöhter Genauigkeit beziehungsweise auch für verschiedene Verschleißzustände des Werkzeugs konsistent erreicht werden.

Gemäß einem weiteren Aspekt der Erfindung wird ein Verfahren zum Betreiben einer Vielzahl von Maschinen zur jeweiligen Bearbeitung eines Werkstücks angegeben. Dabei wird ein erfindungsgemäßes Verfahren zum Betreiben einer ersten Maschine durchgeführt. Die Vielzahl von Maschinen beinhaltet die erste Maschine sowie wenigstens eine zweite Maschine, die jeweils ein Steuerungsgerät aufweist. Mittels jedes der Steuerungsgeräte der wenigstens einen zweiten Maschine werden jeweilige zweite spezifische Daten erhalten werden, welche maschinenspezifische Informationen betreffend die jeweilige zweite Maschine und/oder werkzeugspezifische Informationen betreffend ein Werkzeug der jeweiligen zweiten Maschine zur Bearbeitung des jeweiligen Werkstücks beinhalten. Mittels jedes der Steuerungsgeräte der wenigstens einen zweiten Maschine wird wenigstens eine Achse der jeweiligen zweiten Maschine gemäß dem Verfahrprofil abhängig von den jeweiligen zweiten spezifischen Daten gesteuert, um das jeweilige Werkstück zu bearbeiten.

Das Verfahrprofil wird also mit Vorteil nur einmalig erzeugt und allen Steuerungsgeräten zur Verfügung gestellt, die dann basierend auf den konkret vorliegenden spezifischen Daten die entsprechenden Achsen steuern.

Gemäß zumindest einer Ausführungsform unterscheidet sich die Steuerung der wenigstens eine Achse der jeweiligen zweiten Maschine gemäß dem Verfahrprofil von der Steuerung der wenigstens einen Achse der ersten Maschine gemäß dem Verfahrprofil, wenn sich die jeweiligen zweiten spezifischen Daten von den ersten spezifischen Daten unterscheiden.

Somit kann trotz generischem Verfahrprofil den spezifischen Erfordernissen an den einzelnen Maschinen Rechnung getragen werden.

Weitere Ausführungsformen des erfindungsgemäßen Verfahrens zum Betreiben einer Vielzahl von Maschinen folgen unmittelbar aus den verschiedenen Ausgestaltungen des erfindungsgemäßen Verfahrens zum Betreiben einer ersten Maschine und umgekehrt. Insbesondere lassen sich einzelne Merkmale und entsprechende Erläuterungen sowie Vorteile bezüglich der verschiedenen Ausführungsformen zu dem erfindungsgemäßen Verfahren zum Betreiben einer ersten Maschine analog auf entsprechende Ausführungsformen des erfindungsgemäßen Verfahrens zum Betreiben einer Vielzahl von Maschinen übertragen.

Gemäß einem weiteren Aspekt der Erfindung wird ein Steuerungssystem zum Betreiben einer ersten Maschine zur Bearbeitung eines Werkstücks angegeben. Das Steuerungssystem weist ein Datenverarbeitungssystem auf, das dazu eingerichtet ist, ein Sollprofil zu erhalten, welches wenigstens einen Teil einer Oberfläche oder einer Kontur des Werkstücks gemäß einem angestrebten Bearbeitungsergebnis beschreibt, und abhängig von einer Wavelet-Transformation des Sollprofils ein Verfahrprofil zu erzeugen. Das Steuerungssystem weist ein Steuerungsgerät für die erste Maschine auf, das dazu eingerichtet ist, erste spezifische Daten zu erhalten, welche maschinenspezifische Informationen betreffend die erste Maschine und/oder werkzeugspezifische Informationen betreffend ein Werkzeug der erste Maschine zur Bearbeitung des Werkstücks beinhalten, und wenigstens eine Achse der ersten Maschine gemäß dem Verfahrprofil abhängig von den ersten spezifischen Daten zu steuern, um das Werkstück zu bearbeiten.

Gemäß zumindest einer Ausführungsform ist das Datenverarbeitungssystem getrennt, insbesondere räumlich getrennt, von der ersten Maschine und dem Steuerungsgerät für die erste Maschine vorgesehen und/oder das Datenverarbeitungssystem ist ein Universalcomputer.

Gemäß zumindest einer Ausführungsform weist das Steuerungssystem ein jeweiliges Steuerungsgerät für wenigstens eine zweite Maschine auf. Jedes der Steuerungsgeräte für die wenigstens eine zweite Maschine ist dazu eingerichtet, jeweilige zweite spezifische Daten zu erhalten, welche maschinenspezifische Informationen betreffend die jeweilige zweite Maschine und/oder werkzeugspezifische Informationen betreffend ein Werkzeug der jeweiligen zweiten Maschine zur Bearbeitung des jeweiligen Werkstücks beinhalten, und wenigstens eine Achse der jeweiligen zweiten Maschine gemäß dem Verfahrprofil abhängig von den jeweiligen zweiten spezifischen Daten zu steuern, um das jeweilige Werkstück zu bearbeiten.

Weitere Ausführungsformen des erfindungsgemäßen Steuerungssystems folgen unmittelbar aus den verschiedenen Ausgestaltungen der erfindungsgemäßen Verfahren und umgekehrt. Insbesondere lassen sich einzelne Merkmale und entsprechende Erläuterungen sowie Vorteile bezüglich der verschiedenen Ausführungsformen zu den erfindungsgemäßen Verfahren analog auf entsprechende Ausführungsformen des erfindungsgemäßen Steuerungssystems übertragen. Insbesondere ist das erfindungsgemäße Steuerungssystem zum Durchführen eines erfindungsgemäßen Verfahrens ausgebildet oder programmiert. Insbesondere führt das erfindungsgemäße Steuerungssystem ein erfindungsgemäßes Verfahren durch.

Gemäß einem weiteren Aspekt der Erfindung wird eine Maschinenvorrichtung angegeben. Die Maschinenvorrichtung weist ein erfindungsgemäßes Steuerungssystem auf sowie die erste Maschine.

Gemäß wenigstens einer Ausführungsform, in der das Steuerungssystem das jeweilige Steuerungsgerät für die wenigstens eine zweite Maschine aufweist, beinhaltet die Maschinenvorrichtung die wenigstens eine zweite Maschine.

Gemäß einem weiteren Aspekt der Erfindung wird ein Computerprogramm mit ersten Befehlen und mit zweiten Befehlen angegeben. Das Computerprogramm kann ein erstes Teilcomputerprogramm mit den ersten Befehlen und ein zweites Teilcomputerprogramm mit den zweiten Befehlen beinhalten.

Bei Ausführung der ersten Befehle durch ein Datenverarbeitungssystem eines erfindungsgemäßen Steuerungssystems veranlassen die ersten Befehle das Datenverarbeitungssystem dazu, das Sollprofil zu erhalten und abhängig von der Wavelet-Transformation des Sollprofils das Verfahrprofil zu erzeugen. Bei Ausführung der zweiten Befehle durch ein Steuerungsgerät eines erfindungsgemäßen Steuerungssystems veranlassen die zweiten Befehle das Steuerungsgerät dazu, die ersten spezifischen Daten zu erhalten und die wenigstens eine Achse der ersten Maschine gemäß dem Verfahrprofil abhängig von den ersten spezifischen Daten zu steuern, um das Werkstück zu bearbeiten.

Das Computerprogramm kann als Computerprogrammprodukt bezeichnet werden. Weitere Ausführungsformen des erfindungsgemäßen Computerprogramms folgen unmittelbar aus den verschiedenen Ausgestaltungen der erfindungsgemäßen Verfahren und umgekehrt. Insbesondere lassen sich einzelne Merkmale und entsprechende Erläuterungen sowie Vorteile bezüglich der verschiedenen Ausführungsformen zu den erfindungsgemäßen Verfahren analog auf entsprechende Ausführungsformen des erfindungsgemäßen Computerprogramms übertragen. Insbesondere wird durch Ausführung der ersten Befehle durch das Datenverarbeitungssystem und der zweiten Befehle durch das Steuerungsgerät ein erfindungsgemäßes Verfahren durchgeführt.

Die ersten Befehle und die zweiten Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein Computerprogrammprodukt angegeben, welches ein computerlesbares erstes Speichermedium, das ein erstes Teilcomputerprogramm eines erfindungsgemäßen Computerprogramms speichert, sowie ein computerlesbares zweites Speichermedium angegeben, das ein zweites Teilcomputerprogramm des erfindungsgemäßen Computerprogramms speichert.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen
- FIG 1: eine schematische Darstellung einer beispielhaften Ausführungsform eines erfindungsgemäßen Steuerungssystems zum Betreiben einer ersten Maschine zur Bearbeitung eines Werkstücks;
- FIG 2: ein Ablaufdiagramm einer beispielhaften Ausführungsform eines erfindungsgemäßen Verfahrens zum Betreiben einer ersten Maschine zur Bearbeitung eines Werkstücks; und
- FIG 3: eine schematische Darstellung einer beispielhaften Ausführungsform einer erfindungsgemäßen Maschinenvorrichtung.

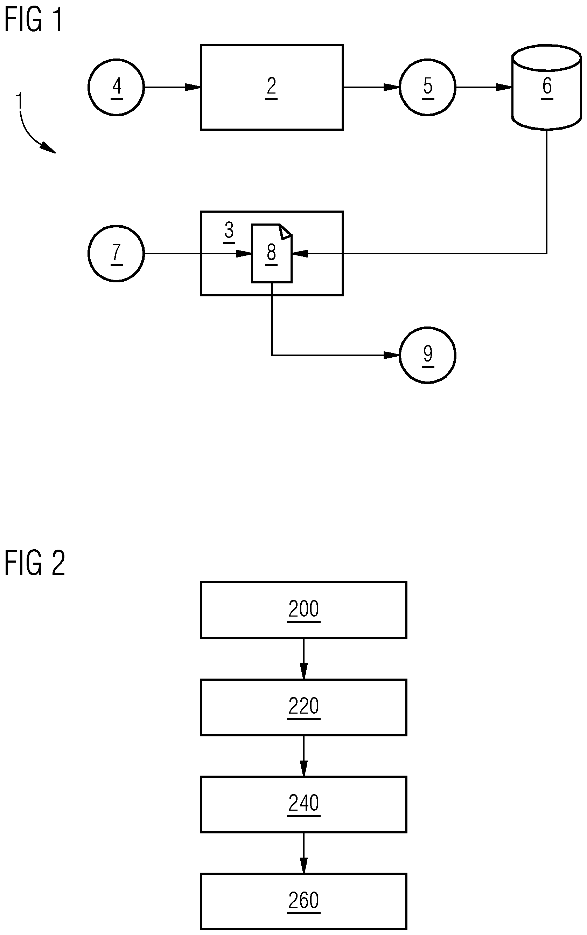

In FIG 1 ist schematisch eine beispielhafte Ausführungsform eines erfindungsgemäßen Steuerungssystems 1 zum Betreiben einer ersten Maschine zur Bearbeitung eines Werkstücks 12 dargestellt.

Das Steuerungssystem 1 weist ein Datenverarbeitungssystem 2 auf, das dazu eingerichtet ist, ein Sollprofil 4 zu erhalten, welches wenigstens einen Teil einer Oberfläche oder einer Kontur des Werkstücks 12 gemäß einem angestrebten Bearbeitungsergebnis beschreibt, und abhängig von einer Wavelet-Transformation des Sollprofils 4 ein Verfahrprofil 5 zu erzeugen und beispielsweise auf einem Speichergerät 6 zu speichern. Das Steuerungssystem 1 weist ein Steuerungsgerät 3 für die erste Maschine 10 auf, das dazu eingerichtet ist, erste spezifische Daten 7 zu erhalten, welche maschinenspezifische Informationen betreffend die erste Maschine 10 und/oder werkzeugspezifische Informationen betreffend ein Werkzeug 11 der erste Maschine 10 zur Bearbeitung des Werkstücks 12 beinhalten, und wenigstens eine Achse der ersten Maschine 10 gemäß dem Verfahrprofil 5, welches das Steuerungsgerät 3 beispielsweise aus dem Speichergerät 6 auslesen kann, abhängig von den ersten spezifischen Daten 7 zu steuern, um das Werkstück 12 zu bearbeiten.

Dabei kann das Steuerungsgerät 3 beispielsweise abhängig von dem Verfahrprofil 5 ein Teileprogramm 8 erzeugen oder das Teileprogramm 8 kann bereits durch das Datenverarbeitungssystem 2 erzeugt und gegebenenfalls auf dem Speichergerät 6 gespeichert werden, von wo es das Speichergerät 6 auslesen kann. Zum Steuern der wenigstens einen Achse kann das Steuerungsgerät 3 das Teileprogramm 8 abhängig von den ersten spezifischen Daten abarbeiten oder modifizieren und das modifizierte Teileprogramm 8 abarbeiten. Dabei erzeugt das Steuerungsgerät 3 insbesondere getaktet Steuerbefehle 9 zur Ansteuerung der Achsen den Maschine.

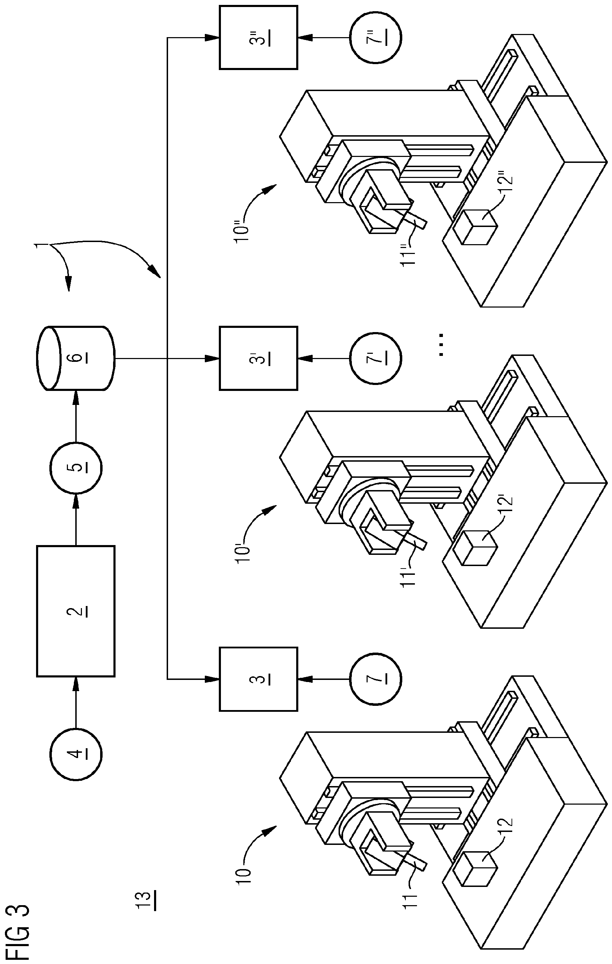

In FIG 3 ist schematisch eine beispielhafte Ausführungsform einer erfindungsgemäßen Maschinenvorrichtung 13 dargestellt, welche ein erfindungsgemäßes Steuerungssystem 1 enthält, beispielsweise ein Steuerungssystem 1 wie bezüglich FIG 1 beschrieben. Die Maschinenvorrichtung 13 beinhaltet die erste Maschine 10.

Beispielsweise kann die Maschinenvorrichtung 13 wenigstens eine zweite Maschine 10', 10" aufweisen, von denen im Beispiel der FIG 3 rein exemplarisch zwei gezeigt sind. In diesem Fall beinhaltet das Steuerungssystem 1 jeweilige Steuerungsgeräte 3, 3' für die wenigstens eine zweite Maschine 10`, 10".

Das Steuerungssystem 1 der FIG 1 beziehungsweise die Maschinenvorrichtung 13 der FIG 3 können insbesondere ein erfindungsgemäßes Verfahren zum Betreiben einer ersten Maschine 10 durchführen. Ein Ablaufdiagramm eines solchen Verfahrens ist in FIG 2 dargestellt. In Schritt 200 erhält das Datenverarbeitungssystem 2 das Sollprofil 4 und in Schritt 220 erzeugt das Datenverarbeitungssystem 2 abhängig von der Wavelet-Transformation des Sollprofils 4 das Verfahrprofil 5.

In Schritt 240 erhält das Steuerungsgerät 3 die ersten spezifische Daten 7 und in Schritt 250 steuert das Steuerungsgerät 3 die wenigstens eine Achse der ersten Maschine 10 gemäß dem Verfahrprofil 5 abhängig von den ersten spezifischen Daten 7.

Die Schritte 240 und 260 können in einem erfindungsgemäßen Verfahren zum Betreiben einer Vielzahl von Maschinen 10, 10`, 10" zur jeweiligen Bearbeitung eines Werkstücks 12, 12`, 12' separat für jede Maschinen 10, 10`, 10" abhängig von jeweiligen spezifischen Daten 7, 7', 7" mittels des jeweiligen Steuerungsgeräts 3, 3`, 3" durchgeführt werden. Die Schritte 200 und 220 werden dabei nur einmalig durch das Datenverarbeitungssystem 2 durchgeführt.

Wie beschrieben ermöglicht es die vorliegende Erfindung, bei der Bearbeitung von Werkstücken mit Maschinen die Rechenanforderungen für Steuerungsgeräte der Maschinen zu reduzieren, insbesondere für die Fertigung einer Vielzahl identischer oder im Wesentlichen identischer Werkstücke mit mehreren Maschinen.

Bisher wird beispielsweise jedes Werkstück beziehungsweise Teileprogramm von neuem interpretiert, Korrekturen und Dynamik werden berechnet, Interpolationen werden berechnet und die Interpolationspunkte werden an die Antriebe zum Bewegen der Achsen gegeben. In verschiedenen Ausführungsformen der Erfindung wird, bevor eine Bearbeitung auf einer ersten Maschine ein Werkstück erfolgt, die Bearbeitung auf einem Datenverarbeitungssystem Offline vorverarbeitet. Das Ergebnis der Vorverarbeitung wird in einem Speicher hinterlegt. Der Speicher kann ein interner Speicher oder ein externer Speicher bezüglich des Datenverarbeitungssystems sein. Die Daten könnten auch in Form eines neuen Teileprogrammes abgelegt werden, angereichert mit den durch die Vorverarbeitung erzeugten Informationen. Nachdem das Datenverarbeitungssystem dies einmalig getan hat, kann das Ergebnis in mehrere Steuerungsgeräte von Maschinen eingespielt und von ihnen jeweils ausgeführt werden.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Betreiben einer ersten Maschine (10) zur Bearbeitung eines Werkstücks (12), wobei
a) mittels eines Datenverarbeitungssystems (2)
- ein Sollprofil (4) erhalten wird, welches wenigstens einen Teil einer Oberfläche oder einer Kontur des Werkstücks (12) gemäß einem angestrebten Bearbeitungsergebnis beschreibt;
- abhängig von einer Wavelet-Transformation des Sollprofils (4) ein Verfahrprofil (5) erzeugt wird; und
b) mittels eines Steuerungsgeräts (3) der ersten Maschine (10)
- erste spezifische Daten (7) erhalten werden, welche maschinenspezifische Informationen betreffend die erste Maschine (10) und/oder werkzeugspezifische Informationen betreffend ein Werkzeug (11) der ersten Maschine (10) zur Bearbeitung des Werkstücks (12) beinhalten; und
- wenigstens eine Achse der ersten Maschine (10) gemäß dem Verfahrprofil (5) abhängig von den ersten spezifischen Daten (7) gesteuert wird, um das Werkstück (12) zu bearbeiten.

2. Verfahren nach Anspruch 1, wobei das Verfahrprofil (5) auf einem Speichergerät (6) gespeichert wird und durch das Steuerungsgerät (3) aus dem Speichergerät (6) ausgelesen wird.

3. Verfahren nach einem der vorhergehenden Ansprüche, wobei zum Erzeugen des Verfahrprofils (5) mittels des Datenverarbeitungssystems (2)
- ein transformiertes Profil erzeugt wird, indem die Wavelet-Transformation des Sollprofils (4) berechnet wird, und das transformierte Profil modifiziert wird;
- das Verfahrprofil (5) erzeugt wird, indem eine inverse Wavelet-Transformation des modifizierten transformierten Profils berechnet wird.

4. Verfahren nach Anspruch 3, wobei Toleranzdaten betreffend eine Toleranz des Sollprofils (4) erhalten werden und
- die Modifikation des transformierten Profils abhängig von den Toleranzdaten durchgeführt wird; und/oder
- eine Wavelet-Basisfunktion zur Durchführung der Wavelet-Transformation abhängig von den Toleranzdaten bestimmt wird.

5. Verfahren nach einem der Ansprüche 3 oder 4, wobei
- die Modifikation des transformierten Profils abhängig von einer vorgegebenen Bearbeitungsart durchgeführt wird; und/oder
- eine Wavelet-Basisfunktion zur Durchführung der Wavelet-Transformation abhängig von der Bearbeitungsart bestimmt wird.

6. Verfahren nach einem der vorhergehenden Ansprüche, wobei das Steuern der wenigstens einen Achse gemäß dem Verfahrprofil (5) beinhaltet, dass mittels des Steuerungsgeräts (3) abhängig von den ersten spezifischen Daten (7) und dem Verfahrprofil (5) eine Vielzahl von Verarbeitungsschritten gemäß einem vorgegebenen Takt getaktet abgearbeitet wird.

7. Verfahren nach einem der vorhergehenden Ansprüche, wobei das Datenverarbeitungssystem (2) ein von der ersten Maschine (10) und dem Steuerungsgerät (3) der ersten Maschine (10) getrenntes Computersystem und/oder ein Universalcomputer ist.

8. Verfahren nach einem der vorhergehenden Ansprüche, wobei die ersten spezifischen Daten (7)
- eine Umgebungstemperatur der ersten Maschine (10) beinhalten; und/oder
- wenigstens einen Achsversatzwert der wenigstens einen Achse der ersten Maschine (10) beinhaltet; und/oder
- eine Nullpunktverschiebung des Werkstücks (12) oder des Werkzeugs (11) beinhaltet; und/oder
- eine Abweichung einer Werkzeuggeometrie des Werkzeugs (11) von einer Idealgeometrie beinhaltet.

9. Verfahren nach einem der vorhergehenden Ansprüche, wobei die erste Maschine (10) eine Werkzeugmaschine (10) oder eine Laserbearbeitungsmaschine oder eine Wasserstrahlbearbeitungsmaschine ist.

10. Verfahren zum Betreiben einer Vielzahl von Maschinen (10, 10`, 10") zur jeweiligen Bearbeitung eines Werkstücks (12, 12`, 12`), wobei ein Verfahren nach einem der vorhergehenden Ansprüche durchgeführt wird und wobei die Vielzahl von Maschinen (10, 10`, 10") die erste Maschine (10) sowie wenigstens eine zweite Maschine (10`, 10"), die jeweils ein Steuerungsgerät (3`, 3") aufweist, beinhaltet, wobei mittels jedes der Steuerungsgeräte (3`, 3") der wenigstens einen zweiten Maschine (10`, 10")
- jeweilige zweite spezifische Daten (7`, 7") erhalten werden, welche maschinenspezifische Informationen betreffend die jeweilige zweite Maschine (10`, 10") und/oder werkzeugspezifische Informationen betreffend ein Werkzeug (11', 11") der jeweiligen zweiten Maschine (10`, 10") zur Bearbeitung des jeweiligen Werkstücks (12`, 12") beinhalten; und
- wenigstens eine Achse der jeweiligen zweiten Maschine (10`, 10") gemäß dem Verfahrprofil (5) abhängig von den jeweiligen zweiten spezifischen Daten (7`, 7") gesteuert wird, um das jeweilige Werkstück (12`, 12") zu bearbeiten.

11. Verfahren nach Anspruch 10, wobei sich die Steuerung der wenigstens eine Achse der jeweiligen zweiten Maschine (10`, 10") gemäß dem Verfahrprofil (5) von der Steuerung der wenigstens einen Achse der ersten Maschine (10) gemäß dem Verfahrprofil (5) unterscheidet, wenn sich die jeweiligen zweiten spezifischen Daten (7`, 7") von den ersten spezifischen Daten (7) unterscheiden.

12. Steuerungssystem (1) zum Betreiben einer ersten Maschine (10) zur Bearbeitung eines Werkstücks (12), das Steuerungssystem (1) aufweisend
- ein Datenverarbeitungssystem (2), das dazu eingerichtet ist, ein Sollprofil (4) zu erhalten, welches wenigstens einen Teil einer Oberfläche oder einer Kontur des Werkstücks (12) gemäß einem angestrebten Bearbeitungsergebnis beschreibt, und abhängig von einer Wavelet-Transformation des Sollprofils (4) ein Verfahrprofil (5) zu erzeugen; und
- ein Steuerungsgerät (3) für die erste Maschine (10), das dazu eingerichtet ist, erste spezifische Daten (7) zu erhalten, welche maschinenspezifische Informationen betreffend die erste Maschine (10) und/oder werkzeugspezifische Informationen betreffend ein Werkzeug der erste Maschine (10) zur Bearbeitung des Werkstücks (12) beinhalten, und wenigstens eine Achse der ersten Maschine (10) gemäß dem Verfahrprofil (5) abhängig von den ersten spezifischen Daten (7) zu steuern, um das Werkstück (12) zu bearbeiten.

13. Steuerungssystem (1) nach Anspruch 12, wobei das Datenverarbeitungssystem (2) getrennt von der ersten Maschine (10) und dem Steuerungsgerät (3) für die erste Maschine (10) vorgesehen ist und/oder ein Universalcomputer ist.

14. Maschinenvorrichtung (13) aufweisend ein Steuerungssystem (1) nach einem der Ansprüche 12 oder 13 sowie die erste Maschine (10).

15. Computerprogrammprodukt aufweisend
- erste Befehle, die bei Ausführung durch ein Datenverarbeitungssystem (2) eines Steuerungssystems (1) nach einem der Ansprüche 12 oder 13 das Datenverarbeitungssystem (2) dazu veranlassen, das Sollprofil (4) zu erhalten und abhängig von der Wavelet-Transformation des Sollprofils (4) das Verfahrprofil (5) zu erzeugen; und
- zweite Befehle, die bei Ausführung durch ein Steuerungsgeräts (3) eines Steuerungssystems (1) nach einem der Ansprüche 12 oder 13 das Steuerungsgerät (3) dazu veranlassen, die ersten spezifischen Daten (7) zu erhalten und die wenigstens eine Achse der ersten Maschine (10) gemäß dem Verfahrprofil (5) abhängig von den ersten spezifischen Daten (7) zu steuern, um das Werkstück (12) zu bearbeiten.
